# EUROPEAN PATENT SPECIFICATION

(11) **EP 0 775 562 B1**
(45) Date of publication and mention of the grant of the patent: **05.07.2000**
(21) Application number: 96500150.6
(22) Date of filing: 21.11.1996
(51) Int. Cl.: B29B 17/00, B09B 3/00

(54) **A device for reducing the volume of plastic material containers**
Gegenstand zur Reduzierung des Volumens von Kunststoffbehältern
Dispositif pour la réduction du volume des récipients plastiques

(30) Priority: 24.11.1995 ES 9502992 U
(43) Date of publication of application: 28.05.1997
(73) Proprietor: Realizaciones P.M.A., S.L., 08007 Barcelona (ES)
(72) Inventor: Salvador Arellano, Angel, C/ Carrasco i Formiguera, 08017 Barcelona (ES)
(74) Representative: Körner, Ekkehard, Dipl.-Ing.

(56) References cited:
- FR-A- 2 231 497
- FR-A- 2 668 732
- FR-A- 2 694 722
- FR-A- 2 709 699

## Description

The present invention relates to a device for reducing the volume of plastic material containers.

In particular, the invention provides a device especially designed to reduce the volume of containers obtained by moulding thermoplastic materials, upon applying heat and a slight manual pressure in order for the containers to be flattened axially.

The device has been devised to solve the current problem derived from the large amount of disposable type containers having the characteristics aforesaid, which require a large storage space, which space is a setback for household chores and moreover in shops where such containers are sold.

The drawback aforesaid is eliminated with the device subject of the present invention for the container, being a bottle or the like, is flattened and its capacity and size is therefore reduced to a minimum, enabling a large number of said containers to be stored in a small crate.

FR-A-2 231 497 shows a device for reducing the volume of thermoplastic bottles by using hot air being blown into the bottle after which the bottle is axially compressed.

Generally speaking, the device subject of the invention is defined in claim 1 and comprises an upwardly elongate structure or housing, its configuration derived from a cylinder of revolution, its lower middle portion being wider and open at the base of such portion, wherein the top portion of the open bottle to be treated is housed, and upon which the device is seated. Said device includes means for generating a hot air current that is injected into the cavity of the container in order to soften its plastic structure, and a slight manual pressure is at the same time exerted upon the top base of the device, assisting in flattening the container, all within little time.

A preferred embodiment of the invention is defined in claim 2.

For ease of explanation, attached hereto is a sheet of drawings showing an embodiment cited as an example.

In the drawings:

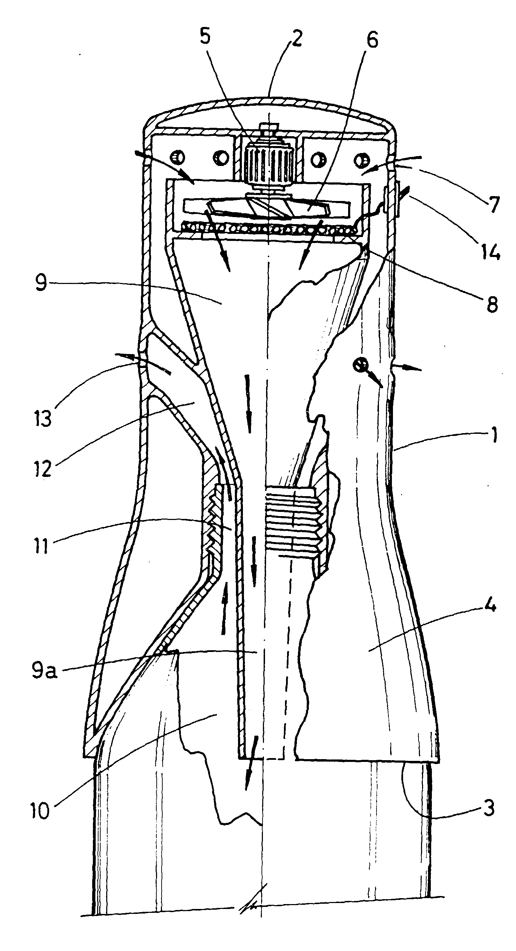

The only figure is a semi-sectional elevation view of the device applied to a bottle to be treated.

With reference to the only figure, the embodiment therein shows a device comprising a housing generally designated -1-, its configuration derived from a cylinder of revolution with a top convex base, at -2-, in order for a user's hand to be easily supported thereon, whereas the lower base is open, at -3-, the lower middle portion of the container having a substantially frustum-of-the-cone configuration, at -4-, the above in accordance with the morphology of the type of containers for which the device is intended.

The top portion of the device, in its functional position, as illustrated in the only figure, contains an electric motor -5- to drive a turbine -6- that draws air in from the outside through communication holes -7-, propelling it through heating resistors -8-, whereupon the heated air is directed through a hollow funnel-like body -9- which on reducing its pitch increases the speed of the hot air that is injected directly into the cavity -10- of the container, which is softened due to the substantial temperature increase and thus becomes easily deformable to flattening under the manual pressure exerted by the user's hand holding the device and supported on its base -2-.

As shown in the figure, the funnel pipe -9a- is inserted into the container -10- in order that air may be injected directly into such container. There is an annular gap between the funnel pipe -9a- and the mouth of the bottle -10-, designated -11-, for the hot air used to leave through the communications -12- and holes -13-.

The device -14- includes an on-off switch -14-.

## Claims

1. A device for reducing the volume of plastic material containers, particularly disposable type containers, **characterised** in that it consists of an upwardly elongate housing (1) open at its bottom base and including within a hollow funnel-like body (9) adopting a coaxial arrangement with respect to the housing, and its pipe (9a) being of suitable section to enable it to be loosely inserted into the mouth of the container, its free end to lie within the container, whereas the wide top opening of the funnel (9) communicates with means fitted in the housing proper which generate a hot air current that is propelled along the funnel and injected into the cavity of the container, in order to soften its constituent plastic material and facilitate its deformation by axial compression under the manual pressure exerted upon the top base (2) of the device.

2. A device for reducing the volume of plastic material containers, as in claim 1, characterised in that the means generating the hot air current comprise an electric motor (5) with its drive shaft connected to a turbine (6) which draws cold air in from the outside through holes (7) and has it flow through electric heating resistors (8), injecting the air through the funnel pipe (9a) into the container cavity, the gap (11) between the latter and the mouth of said container being for the air to leave to the outside.

## Patentansprüche

1. Vorrichtung zum Reduzieren des Volumens von Kunststoffbehältern, insbesondere von Wegwerfbehältern, **dadurch gekennzeichnet**, daß sie aus einem nach oben langgestreckten Gehäuse (1) besteht, das an seiner Unterseite offen ist und darin einen hohlen, trichterförmigen Körper (9) enthält, der eine koaxiale Ausrichtung in Bezug auf das Gehäuse annimmt, wobei sein Rohr (9a) einen geeigneten Querschnitt aufweist, um seine lose Einführung in die Mündung des Behälters zu ermöglichen, wobei sein freies Ende innerhalb des Behälters liegt, während die weite obere Öffnung des Trichters (9) mit Einrichtungen in Verbindung ist, die im Gehäuse in geeigneter Weise befestigt sind und eine Heißluftströmung erzeugen, die in den Trichter geblasen und in den Innenraum des Behälters eingeleitet wird, um das ihn bildende Kunststoffmaterial zu erweichen und seine Verformung durch axiale Kompression unter manuellem Druck zu erleichtern, der auf die Oberseite (2) der Vorrichtung ausgeübt wird.

2. Vorrichtung zum Reduzieren des Volumens von Kunststoffbehälter nach Anspruch 1, dadurch gekennzeichnet, daß die die Heißluftströmung erzeugende Einrichtung einen Elektromotor (5) umfaßt, dessen Antriebswelle mit einer Turbine (6) verbunden ist, die kalte Luft durch Löcher (7) von außen ansaugt und durch elektrische Heizwiderstände (8) drückt und die Luft durch das Trichterrohr (9a) in den Behälterinnenraum einleitet, wobei der Spalt (11) zwischen dem Trichterrohr (9a) und der Mündung des Behälters dem Entweichen der Luft nach außen dient.

## Revendications

1. Dispositif de réduction du volume de récipients en matière plastique, particulièrement des récipients du type jetable, caractérisé en ce qu'il est constitué d'un boîtier allongé vers le haut (1) ouvert au niveau de sa base inférieure et comprenant, à l'intérieur, un corps creux en forme d'entonnoir (9) adoptant une disposition coaxiale par rapport au boîtier, et son conduit (9a) ayant une section appropriée pour lui permettre d'être inséré avec du jeu à l'intérieur de l'embouchure du récipient, et de permettre à son extrémité libre de se trouver à l'intérieur du récipient, pendant que l'ouverture supérieure large de l'entonnoir (9) communique avec des moyens montés de façon appropriée dans le boîtier qui produisent un courant d'air chaud qui est propulsé le long de l'entonnoir et injecté à l'intérieur de la cavité du récipient, afin de ramollir sa matière plastique constituante et faciliter sa déformation par compression axiale sous la pression manuelle exercée sur la base supérieure (2) du dispositif.

2. Dispositif de réduction du volume de récipients en matière plastique selon la revendication 1, caractérisé en ce que les moyens de production du courant d'air chaud comprennent un moteur électrique (5) dont l'arbre d'entraînement est relié à une turbine (6) qui aspire de l'air froid depuis l'extérieur par des trous (7) et le fait circuler à travers des résistances chauffantes électriques (8), injectant l'air à travers le conduit d'entonnoir (9a) à l'intérieur de la cavité du récipient, l'écartement (11) entre ce dernier et l'embouchure dudit récipient étant prévu pour que l'air parte vers l'extérieur.
